# EUROPEAN PATENT APPLICATION

(11) **EP 4 478 119 A1**
(43) Date of publication of application: **18.12.2024**
(21) Application number: 24177946.1
(22) Date of filing: 24.05.2024
(51) Int. Cl.: G02F 1/1335

(54) **VARIABLE-TRANSMITTANCE OPTICAL LAMINATE, METHOD OF MANUFACTURING SAME, AND SMART WINDOW INCLUDING SAME**

(30) Priority: 13.06.2023 KR 20230075741
(71) Applicant: Dongwoo Fine-Chem Co., Ltd., Iksan-si, Jeollabuk-do 54631 (KR)
(72) Inventor: KIM, Dong-Hwi, 54631 Jeollabuk-do (KR); LIM, Geo-San, 54631 Jeollabuk-do (KR); MOON, Bo-Ra, 54631 Jeollabuk-do (KR)
(74) Representative: Betten & Resch

(57) **Abstract**

Proposed is a variable-transmittance optical laminate, the optical laminate including a first polarization plate; a first transparent conductive layer formed on one surface of the first polarization plate; a second polarization plate positioned opposite to the first polarization plate; a second transparent conductive layer formed on one surface of the second polarization plate and positioned opposite to the first transparent conductive layer, and a liquid crystal layer interposed between the first transparent conductive layer and the second conductive layer, in which the first polarization plate is formed by laminating an ultraviolet ray protection substrate, a polarizer, and a near-ultraviolet ray protection layer. A method of manufacturing the optical laminate and a smart window including the optical laminate are also proposed.

## Description

### BACKGROUND OF THE DISCLOSURE

### 1. Field of the Disclosure

The present disclosure relates to a variable-transmittance optical laminate, a method of manufacturing the same, and a smart window including the same.

### 2. Description of the Related Art

In general, exterior light-blocking coatings are often applied to the windows of vehicles and other forms of transportation. However, the glass windows of conventional transportation means have a fixed transmittance, and the external light-blocking coatings also have a fixed transmittance. The fixed overall transmittance of the windows of these conventional transportation means can cause accidents. For instance, when the overall transmittance is set low, no problems occur during daytime when there is enough light around. Meanwhile, at night when there is not enough light around, drivers may have difficulty properly checking the surroundings of their vehicles. Meanwhile, when the overall transmittance is set high, the high transmittance may cause dazzle to drivers during daytime when there is sufficient light around. In addition, in many cases, the windows of buildings are often coated to block external light. That is to improve cooling and heating efficiency and save energy. In this case, when the transmittance is fixed, efficiency in energy saving is not achieved, as in the case of transportation means.

Accordingly, variable-transmittance optical laminates, which are laminates with transmittance that varies depending on the voltage applied thereto, have been developed. The variable-transmittance optical laminates operate in a manner that the orientation of liquid crystal molecules changes depending on the application voltage, which results in a change in transmittance. The existing variable-transmittance optical laminates include a liquid crystal layer the phase of which changes depending on the application of the electric field, so that the target transmittance can be achieved. However, the existing optical laminates frequently encounter a problem that near-ultraviolet rays or ultraviolet rays penetrate the liquid crystals, causing damage to the liquid crystal layer thereof, which shortens the lifespan of the display.

Korean Patent No. 10-0416924 discloses a method of imparting an ultraviolet (UV) ray absorbing function to a polarizing film based on a polyvinyl alcohol film and also discloses a UV-absorbing polarizing film manufactured by the method. Unfortunately, when such a polarizing film is used in liquid crystal displays or smart windows including a polarizer, the polarizing film has limitations in controlling the transmittance because it cannot prevent the deterioration of a liquid crystal layer after the application of a voltage.

Therefore, there is a need to develop a variable-transmittance optical laminate that includes a polarizer and has excellent light fastness because the transmittance thereof decreases when a voltage is applied. In addition, there is a need to develop a smart window including the same variable-transmittance optical laminate.

### [Related Art Document]

### [Patent Document]

(Patent Document 1) Korean Patent No. 10-0416924

### SUMMARY OF THE DISCLOSURE

To address the problems mentioned above, the present disclosure is to provide a variable-transmittance optical laminate being capable of maintaining transparency in the visible light region by having excellent light fastness while preventing deterioration of a liquid crystal layer thereof by efficiently blocking near-ultraviolet rays.

In addition, the present disclosure is to provide a smart window including the variable-transmittance optical laminate, and a window for vehicles or buildings to which the same optical laminate is applied.

However, the problems to be solved by the present disclosure are not limited to the problems mentioned above. Other problems not mentioned will be clearly understood by those skilled in the art from the description below.

The present disclosure relates to a variable-transmittance optical laminate including: a first polarization plate; a first transparent conductive layer formed on one surface of the first polarization plate; a second polarization plate positioned opposite to the first polarization plate; a second transparent conductive layer formed on one surface of the second polarization plate and positioned opposite to the first transparent conductive layer, and a liquid crystal layer interposed between the first transparent conductive layer and the second conductive layer, in which the first polarization plate includes an ultraviolet ray protection substrate, a polarizer, and a near-ultraviolet ray protection layer.

In the present disclosure, the first polarization plate may be positioned on the outermost side of the variable-transmittance optical laminate to face a light source.

In the present disclosure, the ultraviolet ray protection substrate, polarizer, and near-ultraviolet ray protection layer of the first polarization plate are sequentially laminated inward from outside facing the light source to inside.

In the present disclosure, the ultraviolet ray protection substrate has a transmittance of 10% or less for a wavelength of 380 nm or less.

In the present disclosure, the ultraviolet ray protection substrate may contain an ultraviolet ray blocking additive.

In the present disclosure, the ultraviolet ray protection substrate may include at least one type selected from the group consisting of polyester-based films, cellulose-based films, polyimide-based films, and polycarbonate films.

In the present disclosure, the near-ultraviolet ray protection layer may include at least one type selected from the group consisting of near-ultraviolet ray absorbers and ultraviolet ray photosensitizers.

In the present disclosure, the near-ultraviolet ray absorbers have a maximum absorption wavelength in a range of 390 to 430 nm.

In the present disclosure, the near-ultraviolet ray absorbers may be cyanine-based compounds.

In the present disclosure, the ultraviolet photosensitizers have a maximum absorption wavelength in a range of 350 to 400 nm.

In the present disclosure, the ultraviolet ray photosensitizer may be an oxazole-based compound.

In the present disclosure, at least one of the first polarization plate and the second polarization plate may include at least one type of functional layer selected from the group consisting of functional coating layers, protective layers, phase control layers, and refractive index control layers.

In the present disclosure, at least one of the first and second polarization plates may have a thickness in a range of 30 to 200 µm.

In the present disclosure, at least one of the first and second transparent conductive layers may have no separate substrate between the at least one of the first and second transparent conductive layers and either one of the first and second polarization plates, thereby being in direct contact with any one of the first and second polarization plates.

In the present disclosure, the at least one of the first and second transparent conductive layers may further have an adhesion-aiding layer between the at least one of the first and second transparent conductive layers and either one of the first and second polarization plates and may be in direct contact with any one of the first and second polarization plates.

In the present disclosure, the at least one of the first and second transparent conductive layers may include at least one type selected from the group consisting of transparent conductive oxides, metals, carbon-based materials, conductive polymers, conductive inks, and nanowires.

In the present disclosure, the liquid crystal layer may include at least one type selected from the group consisting of ball spacers and column spacers.

In the present disclosure, the variable-transmittance optical laminate may further include at least one type selected from the group consisting of sealants, alignment films, pressure sensitive adhesive/adhesive layers, and ultraviolet ray light absorbing layers.

In addition, the present disclosure relates to a method of manufacturing a variable-transmittance optical laminate.

In addition, the present disclosure relates to a smart window including the variable-transmittance optical laminate.

In addition, the present disclosure may relate to transportation means including the smart window. The present disclosure may relate to vehicles including the smart window applied to at least one of the front window, rear window, side window, sunroof window, and interior partition thereof.

In addition, the present disclosure may relate to wearable devices and architectural windows, all including the smart window.

The variable-transmittance optical laminate according to the present disclosure exhibits a low transmittance for ultraviolet rays and/or near-ultraviolet rays so that ultraviolet and/or near-ultraviolet rays can be effectively blocked. Therefore, the variable-transmittance optical laminate can prevent a liquid crystal layer included therein from being deteriorated by ultraviolet rays, thereby preventing the lifespan of a display from being shortened.

In addition, according to the present disclosure, since the conductive layers are directly formed on one surface of the respective polarization plates, separate substrates used to form and carry the respective conductive layers are not present in the optical laminate. Thus, the variable-transmittance optical laminate has a significantly reduced thickness compared to conventional optical laminates.

In addition, according to the present disclosure, since the conductive layers are directly formed on one surface of the respective polarization plates, separate substrates used to form and carry the conductive layers are not present in the optical laminate. Thus, the optical laminate may have an improved transmittance in transmission mode compared to conventional optical laminates.

In addition, with the use of the variable-transmittance optical laminate of the present disclosure, it is possible to provide a high-quality smart window and a window for vehicles or buildings to which the same optical laminate is applied.

### BRIEF DESCRIPTION OF THE DRAWINGS

FIG. 1 shows the structure of a first polarization plate according to an embodiment of the present disclosure;
FIG. 2 shows a preferred laminated structure of a variable-transmittance optical laminate according to an embodiment of the present disclosure; and
FIGS. 3A to 3C respectively show the observation results of light fastness evaluation according to experimental examples, specifically, FIG. 3A showing a state where no light leakage phenomenon is observed and opacity is maintained, FIG. 3B showing a state where light leakage is observed in some parts, and FIG. 3C showing a state where light leakage is observed on the entire surface.

### DESCRIPTION OF THE PREFERRED EMBODIMENTS

The present disclosure relates to a method of manufacturing a variable-transmittance optical laminate which effectively shields ultraviolet and/or near-ultraviolet rays, thereby the optical laminate enables to prevent the deterioration of the liquid crystal layer thereof caused by ultraviolet rays. In addition, the present disclosure relates to a smart window including the same variable-transmittance optical laminate. More specifically, the optical laminate may include: a first polarization plate; a first transparent conductive layer formed on one surface of the first polarization plate; a second polarization plate positioned opposite to the first polarization plate; a second transparent conductive layer formed on one surface of the second polarization plate and positioned opposite to the first transparent conductive layer, and a liquid crystal layer interposed between the first transparent conductive layer and the second conductive layer, in which the first polarization plate includes an ultraviolet ray protection substrate, a polarizer, and a near-ultraviolet ray protection layer. Preferably, the ultraviolet ray protection substrate, the polarizer, and the near-ultraviolet ray protection layer of the first polarization plate are sequentially laminated inward from outside facing the light source to inside.

According to one embodiment of the present disclosure, the laminated film (optical laminate) may have a low transmittance of 10% or less at wavelengths of 360 nm, 380 nm, and/or 400nm. Preferably, the laminated film may preferably have a low transmittance of 9% or less, more preferably 7% or less. In these cases, the laminated film effectively shields ultraviolet and/or near-ultraviolet rays, thereby the laminated film enables to prevent the deterioration of the liquid crystal layer thereof. Thus, it is possible to provide a high-quality smart window and a window for vehicles or buildings to which the same is applied.

The variable-transmittance optical laminate of the present disclosure is particularly suitable for technical fields in which the light transmittance may vary depending on the voltage application. For instance, the optical laminate may be used for a smart window.

A smart window refers to an optical structure that controls the amount of light or heat passing by changing light transmittance depending on the application of an electrical signal. In other words, a smart window is set to change its state into transparent, opaque, or translucent depending on voltage value. A smart window is also called variable transmittance glass, dimming glass, or smart glass.

A smart window may be used as a partition for dividing the internal space of vehicles and buildings or as a partition for protecting privacy, or as a skylight window placed in openings of buildings. In addition, a smart window may also be used as a part of highway signs, billboards, scoreboards, clocks, or advertising screens. A smart window may be used to replace glass installed for mobile vehicles such as windows or sunroofs of cars, buses, airplanes, ships, or trains.

The variable-transmittance optical laminate of the present disclosure may also be used for a smart window in various technical fields described above. However, any one of the conductive layers of the optical laminate is directly formed on either one of the polarization plates by having no separate substrate between the one of the conductive layers and either one of the polarization plates, thereby the optical laminate has a thin thickness and favorable properties for bending. Thus, the optical laminate may be suitably used in particular for a smart window for vehicles or buildings. In one or more embodiments, a smart window, to which the variable-transmittance optical laminate of the present disclosure is applied, may be used in a front window, a rear window, a side window, and a sunroof window of a vehicle, or a window for a building. In addition to blocking external light, smart windows may also be used as a part of an internal partition for dividing internal spaces of cars or buildings or for protecting privacy.

Hereinafter, embodiments of the present disclosure will be described in more detail with reference to the drawings, and the following drawings attached to this specification illustrate preferred embodiments of the present disclosure. The drawings serve to further convey the technical idea of the present disclosure along with the contents of the above-described disclosure. Thus, the present disclosure should not be construed as limited to the matters described in such drawings.

The terms used in this specification are for describing embodiments and are not intended to limit the disclosure. As used herein, singular forms also include plural forms unless specifically stated otherwise in the context. For example, "polarization plate" as used herein may mean at least one of a first polarization plate and a second polarization plate. "Transparent conductive layer" may mean at least one of a first transparent conductive layer and a second transparent conductive layer.

As used herein, "comprises" and/or "comprising" means one or more other components, steps, operations, and/or elements other than the mentioned components, steps, operations, and/or elements, and do not exclude the existence or addition thereof. Like reference numerals refer to like elements throughout the specification.

Spatially relative terms such as "down", "bottom", "lower part", "up", "top", and "upper part" may refer to one element or component and other elements or components as shown in the drawing. The words may be used to easily describe correlations with others. Spatially relative terms should be understood as terms that include different directions of the element during use or operation in addition to the direction shown in the drawings. For example, when an element shown in a drawing is turned over, an element described as "down" or "bottom" another element may be placed "above" the other element. Accordingly, the illustrative term "down" may include both downward and upward directions. Elements may also be oriented in other directions, so spatially relative terms may be interpreted according to orientation.

In the present disclosure, "transparent" means a state that the transmittance of visible light is 70% or more or 80% or more.

In the present disclosure, "ultraviolet rays" mean a wavelength in a range of 100 to 390 nm, and "near-ultraviolet rays" mean a wavelength in a range of 390 to 420 nm.

In the present disclosure, "shielding" and "blocking" refer to preventing exposure to rays such as ultraviolet rays or near-ultraviolet rays and are used virtually without distinction between the two words.

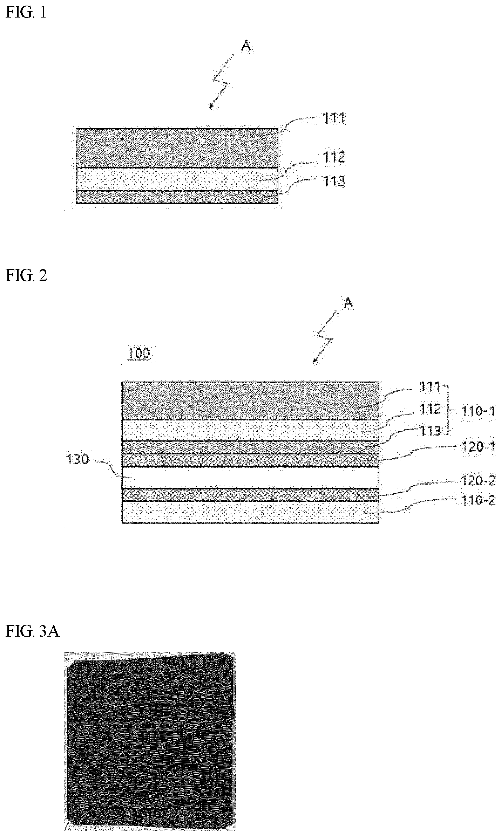

Referring to FIGS. 1 to 2, "outermost side" used in this specification means a side facing a direction A, which is an incident direction of a light source. The outermost side refers to a side that is directly affected by rays such as ultraviolet or near-ultraviolet rays.

### <Optical laminate with variable transmittance>

FIG. 1 shows the structure of a first polarization plate according to an embodiment of the present disclosure, and FIG. 2 shows a preferred stack structure of a variable-transmittance optical laminate according to an embodiment of the present disclosure. Referring to FIG. 2, the present disclosure relates to a variable-transmittance optical laminate 100. The variable-transmittance optical laminate 100 includes: a first polarization plate 110-1; a first transparent conductive layer 120-1 formed on one surface of the first polarization plate; a second polarization plate 110-2 positioned opposite to the first polarization plate; a second transparent conductive layer 120-2 formed on one surface of the second polarization plate and positioned opposite to the first transparent conductive layer, and a liquid crystal layer 130 interposed between the first transparent conductive layer and the second conductive layer. Referring to FIG. 1, the first polarization plate 110-1 may include an ultraviolet ray protection substrate 111, a polarizer 112, and a near-ultraviolet ray protection layer 113. The first polarization plate may further include a protective layer (protective film, not shown).

### First polarization plate 110-1

Referring to FIGS. 1 to 2, the variable-transmittance optical laminate according to an embodiment of the present disclosure includes the first polarization plate 110-1 positioned on the outermost side of the variable-transmittance optical laminate to face a light source A. The first polarization plate 110-1 may include an ultraviolet ray protection substrate 111, a polarizer 112, and a near-ultraviolet ray protection layer 113. More specifically, as shown in FIG. 1, the ultraviolet ray protection substrate 111, the polarizer 112, and the near-ultraviolet ray protection layer 113 of the first polarization plate are sequentially inward laminated from outside to inside. That orientation is preferable in both manufacturing the polarization plate by using an ultraviolet ray curing adhesive agent and preventing contamination of the liquid crystal layer, the contamination occurring due to bleed-out of absorbers.

Specifically, when mixing an ultraviolet ray absorber and a near-ultraviolet ray absorber in the same substrate layer, adjacent layers have a risk of being contaminated due to bleed-out of the absorbers. Thus, a separate addition of the absorbers in a separate layer is preferable. Meanwhile, with a need to protect the polarizer from ultraviolet rays, when an ultraviolet ray curing adhesive agent is used for the bonding of a polarizer protective film, sufficient ultraviolet ray irradiation is required to cure the adhesive agent. Thus, at least one side of the polarizer needs to face ultraviolet ray transmittance. Therefore, as shown in FIG. 1, the variable-transmittance optical laminate with components thereof laminated in the order shown in an embodiment may be viewed to have an optimized laminating order since the optical laminate is possible to fulfill the purpose of manufacturing a composition by using an ultraviolet ray curing adhesive agent. In addition, the optical laminate prevents ultraviolet ray-caused deterioration of the polarization plates and liquid crystal layer, while also preventing contamination caused by bleed-out of the absorbers.

### Ultraviolet ray protection substrate 111

In one embodiment of the present disclosure, the first polarization plate 110-1 includes an ultraviolet ray protection substrate 111. The ultraviolet ray protection substrate 111 has an ultraviolet ray shielding function. The ultraviolet ray protection substrate is preferably positioned on the outermost side of the first polarization plate facing the incident direction of light source (A in FIGS. 1 and 2) to protect both the polarization plate and the liquid crystal layer from ultraviolet rays. Specifically, the inclusion of the ultraviolet ray protection substrate is preferable in terms of effectively protecting both the polarization plates and the liquid crystal layer from ultraviolet rays with a transmittance of 10% or less at a wavelength of 380 nm, specifically, ultraviolet and near-ultraviolet rays. By effectively blocking wavelengths in the ultraviolet ray range, the desired curing degree of the coating layer may be achieved. The ultraviolet ray protection substrate of the present disclosure includes an ultraviolet ray blocking additive and as a result, has an ultraviolet ray-blocking function.

In addition to the ultraviolet ray protection function, the ultraviolet ray protection substrate 111 may function to alleviate the impact and prevent damage to the internal substrate when damage, such as an impact or scratch, is done to the front of the laminate and/or smart window including the same. Accordingly, materials with a high tolerance ability for strain energy are desirable to use for the ultraviolet ray protection substrate. For instance, the materials may include a release film formed from polyester-based resins (for example, polyethyleneterephthalate, polybutyleneterephthalate, polyethylenenaphthalate, and polybutylenenaphthalate); polyimide-based resins; acrylic-based resin; styrene-based resins (for example, polystyrene and acrylonitrile-styrene); polycarbonate-based resins; polylactic acid resins; polyurethane-based resins; polyolefin-based resins (for example, polyethylene, polypropylene, and ethylene-propylene copolymer); vinyl-based resins (for example, polyvinyl chloride and polyvinylidene chloride); polyamide-based resins; sulfone-based resins; polyether-etherketone-based resins; allylate-based resins; and cellulose-based resins (for example, triacetylcellulose), or a mixture of the resins. Specifically, the ultraviolet ray protection substrate may include at least one type selected from the group consisting of polyester-based films, cellulose-based films, polyimide-based films, and polycarbonate films. In another embodiment of the present disclosure, the cellulose-based films are most preferred because the cellulose-based films are optically transparent and have excellent durability against friction, heat, and/or chemical damage. The ultraviolet ray protection substrate using the cellulose-based resins may have no limitation in thickness, but the thicker the ultraviolet ray protection substrate, the heavier and less manageable the ultraviolet ray protection substrate. A thickness in a range of 25 to 80 µm is preferred for a protective film.

In yet another embodiment of the present disclosure, the ultraviolet ray protection substrate of the present disclosure includes an ultraviolet ray blocking additive and as a result, has an ultraviolet ray-blocking function. When the ultraviolet ray protection substrate contains an ultraviolet ray-blocking additive, the ultraviolet ray protection substrate effectively shields ultraviolet rays in a wavelength region of 400 nm or less, preventing deterioration of the liquid crystal layer. In addition, the ultraviolet ray protection substrate may address the problem of shortening the lifespan of a variable-transmittance optical laminate and smart window including the same. The ultraviolet ray blocking additive may include benzophenone compounds, benzotriazole, and triazine-based compounds, but is not limited thereto. The ultraviolet ray blocking additive is preferably contained in an amount of 0.1% to 10% by weight based on the total weight of the composition forming the substrate.

The ultraviolet ray protection substrate 111 has no particular limitation in thickness, for example, a thickness thereof may be in a range of 10 to 100 µm. When the thickness is within the range, the ultraviolet ray protection substrate has excellent handling properties and is preferable as a member of a smart window laminate.

### Polarizer 112

In the variable-transmittance optical laminate according to an embodiment of the present disclosure, at least one of a first polarization plate 110-1 and a second polarization plate 110-2 may use a conventional or later-developed polarizer. Preferably, in the case of the first polarization plate 110-1, the ultraviolet ray protection substrate 111, the polarizer 112, and the near-ultraviolet ray protection layer 113, which will be described later, may be sequentially laminated. The polarizer may include, for example, a stretchable polarizer or a coatable polarizer.

In one embodiment, the stretchable polarizer may include stretched polyvinyl alcohol (PVA)-based resins. The polyvinyl alcohol (PVA)-based resins may be polyvinyl alcohol-based resins obtained by saponifying polyvinyl acetate-based resins. Polyvinyl acetate-based resins may include polyvinyl acetates, which are homopolymers of vinyl acetates. In addition, Polyvinyl acetate-based resins may include vinyl acetates, as well as copolymers of vinyl acetates, and other monomers capable of copolymerization with vinyl acetates. The other monomers may include unsaturated carboxylic acid-based, unsaturated sulfonic acid-based, olefin-based, vinylether-based, and acrylamide-based monomers with an ammonium group. In addition, the polyvinyl alcohol (PVA)-based resins include those modified and may include, for example, polyvinylformal or polyvinylacetal, which is modified into aldehydes.

In another embodiment, the coatable polarizer may be formed by using a liquid crystal coating composition. Herein, the liquid crystal coating composition may include reactive liquid crystal compounds and dichroic dyes.

The description regarding the reactive liquid crystal compounds of the optically functional film described above may be consistently applicable to the reactive liquid crystal compounds.

The dichroic dyes are components that are included in the liquid crystal coating composition and provide polarization properties. As a result, the absorbance in the direction of the long axis of the molecule and the absorbance in the direction of the short axis have different properties. The dichroic dyes may include conventional or later-developed dichroic dyes. For instance, the dichroic dyes may include acridine dyes, oxazine dyes, cyanine dyes, naphthalene dyes, azo dyes, and anthraquinone dyes and may be used alone or in combination thereof.

The liquid crystal coating composition may further include solvents capable of dissolving the reactive liquid crystal compounds and the dichroic dyes. For instance, the solvents may include propylene glycol monomethyl ether acetate (PGMEA), methyl ethyl ketone (MEK), xylene, and chloroform. In addition, the liquid crystal coating composition may further include leveling agents and polymerization initiators within a range that does not impair the polarization properties of a coating film.

The liquid crystal coating composition may further include solvents capable of dissolving the reactive liquid crystal compounds and the dichroic dyes. For instance, the solvents may include propylene glycol monomethyl ether acetate (PGMEA), methyl ethyl ketone (MEK), xylene, and chloroform. In addition, the liquid crystal coating composition may further include leveling agents and polymerization initiators within a range that does not impair the polarization properties of the coating film.

A coating layer (the coating film) may have an elastic modulus of 10 MPa or more, preferably 10 to 10⁴ MPa. When the elastic modulus of the coating layer satisfies the range, excellent adhesion and flexibility may be exhibited.

In yet another embodiment, a coating layer may be formed of a composition for forming photocurable coating layers including photopolymerizable compounds and photopolymerization initiators.

The photopolymerizable compounds are not particularly limited as long as the photopolymerizable compounds induce the elastic modulus of the coating layer to be within the above-mentioned elastic modulus range. For instance, the photopolymerizable compounds may include acrylic-based monomers, epoxy-based monomers, vinylether-based monomers, and oxetane-based monomers. In terms of improving the elastic modulus, epoxy-based monomers, vinylether-based monomers, and oxetane-based monomers may be preferably used. These may be used alone or in combination with two or more types.

The acrylic-based monomers may include, for example, methyl(metha)acrylate, ethyl(metha)acrylate, n-propyl(metha)acrylate, n-butyl(metha)acrylate, isobutyl(metha)acrylate, tert-butyl(metha)acrylate, (metha)acrylate, cyclohexyl(metha)acrylate, 2-ethylhexyl(metha)acrylate, lauryl(metha)acrylate, (metha)acrylate, 2-methoxyethyl(metha)acrylate, (metha)acrylate, 2-hydroxyethyl (metha)acrylate, 2-hydroxypropyl (metha)acrylate, 2-hydroxybutyl (metha)acrylate, 4-hydroxybutyl (metha)acrylate, glycerol mono(metha)acrylate, 3 -chloro-2-hydroxypropyl(metha)acrylate, 2-hydroxy-3-phenoxypropyl (metha)acrylate, ethyleneglycoldi(metha)acrylate, diethyleneglycoldi(metha)acrylate, tri ethyleneglycoldi(metha)acrylate, butyleneglycoldi(metha)acrylate, nonaethyleneglycoldi(metha)acrylate, polypropyleneglycoldi(metha)acrylate, dipropyleneglycoldi(metha)acrylate, neopentylglycoldi(metha)acrylate, 1,3-butanedioldi(metha)acrylate, 1,4-butanedioldi(metha)acrylate, 1.6-hexanedioldi(metha)acrylate, trimethylolpropanetri(metha)acrylate, neopentylglycoldi(metha)acrylate, pentaerythritoltri(metha)acrylate, trimethylolmethanetri(metha)acrylate, isobornyl(metha)acrylate, N-vinylpyrrolidone, acryloylmorpholine, urethane(metha)acrylate, tetrahydrofurfuryl(metha)acrylate, (metha)acrylate of monoε-caprolactone adduct of tetrahydrofurfurylalcohol, (metha)acrylate of diε-caprolactone adduct of tetrahydrofurfurylalcohol, (metha)acrylate of monoε-methyl-δ-valerolactone adduct of tetrahydrofurfurylalcohol, (metha)acrylate of diβ-methyl-δ-valerolactone adduct of tetrahydrofurfurylalcohol, ω-carboxy-polycaprolactone monoacrylate, and dimethylaminoethyl acrylate. These may be used alone or in combination with two or more types.

The epoxy-based monomers may include aromatic epoxy compounds, cycloaliphatic epoxy compounds, and aliphatic epoxy compounds.

The aromatic epoxy compounds may include diglycidylether of bisphenol A, diglycidylether of bisphenol F, and phenoxy glycidylether.

The cycloaliphatic epoxy compounds may include dicyclopentadienedioxide, limonenedioxide, 4-vinylcyclohexenedioxide, 3,4-epoxycyclohexylmethyl 3,4-epoxycyclohexanecarboxylate, and bis(3,4-epoxycyclohexylmethyl)adipate.

The aliphatic epoxy compounds may include 1,6-hexanedioldiglycidyl ether, 1,4-butanedioldiglycidyl ether, trimethyl allpropanetriglycidylether, pentaerythritoltetraglycidylether, and polytetramethyleneglycoldiglycidylether.

The vinylether-based monomers may include diethyleneglycoldivinylether, triethyleneglycoldivinylether, cyclohexyl vinyl ether, polyethyleneglycoldivinylether, and 1,4-cyclohexanedimethanoldivinylether. These may be used alone or in combination of two or more types.

The oxetane-based monomers may include 2-ethylhexyloxetane, xylylenebisoxetane, 3-ethyl-3-hydroxymethyloxetane, 1,4-bis[(3-ethyloxetan-3-yl)methoxymethyl]benzene, 3-ethyl-3-(2-ethylhexyloxymethyl)oxetane, bis(3-ethyl-3-oxetanylmethyl) ether, 3-ethyl-3-(phenoxymethyl)oxetane, 3-ethyl-3-(cyclohexyloxymethyl)oxetane, phenolnovolaxoxetane, and 1,3-bis[(3-ethyloxetan-3-yl)methoxy]benzene. These may be used alone or in combination of two or more types.

The photopolymerization initiators may be cationic initiators or radical initiators commonly used in the industry. The cationic initiators may include onium salt compounds and iron-arene complexes.

The onium salt compounds may include aromatic diazonium salts (for example, benzenediazoniumhexafluoroantimonate, benzenediazoniumhexafluorophosphate, and benzenediazonium hexafluoroborate); aromatic iodonium salts (for example, diphenyliodonium tetrakis(pentafluorophenyl)borate, diphenylioodniumhexafluorophosphate, diphenyliodoniumhexafluoroantimonate, and di(4-nonylphenyl)iodonium hexafluorophosphate); and aromatic sulfonium salts (for example, triphenylsulfoniumhexafluorophosphate, triphenylsulfoniumhexafluoroantimonate, triphenylsulfonium tetrakis(pentafluorophenyl)borate, diphenyl[4-(phenylthio)phenyl]sulfonium hexafluoroane thymonate, 4,4'-bis[diphenylsulfonio]diphenylsulfidebishexafluorophosphate, 4,4'-bis[di(β-hydroxyethoxy)phenylsulfonio]diphenylsulfidebishexafluoroantimonate, 4,4'-bis[di(β-hydroxyethoxy)phenylsulfonio]diphenylsulfidebishexafluorophosphate, 7-[di(p-toluyl)sulfonio]-2-isopropylthioxanthone hexafluoroane thymonate, 7-[di(p-toluyl)sulfonio]-2-isopropylthioxanthonetetrakis(pentafluorophenyl)borate, 4-phenylcarbonyl-4'-diphenylsulfonio-diphenylsulfidehexafluorophosphate, 4-(p-tert-butylphenylcarbonyl)4'-diphenylsulfonio-diphenylsulfide hexafluoroantimonate, 4-(p-tert-butylphenylcarbonyl)-4'-di(p-toluyl)sulfonio-diphenylsulfide tetrakis(pentafluorophenyl)borate, and phosphate of diphenyl[4-(phenylthio)phenyl]sulfonium).

The iron-arene complexes may include xylene-cyclopentadienyliron(II)hexafluoroantimonate, cumene-cyclopentadienyliron(II)hexafluorophosphate, and xylene-cyclopentadienyliron(II)-tris(trifluoromethylsulfonyl)methanide.

The radical initiators may include acetophenone-based, benzoin-based compounds, benzophenone-based compounds, thioxanthone-based compounds, and triazine-based compounds. These may be used alone or in combination of two or more types.

The acetophenone-based compounds may include oligomers of diethoxyacetophenone, 2-hydroxy-2-methyl-1-phenylpropan-1-one, benzyldimethylketal, 2-hydroxy-2-methyl-1-[2-(2-hydroxyethoxy)phenyl]propan-1-one, 1-hydroxycyclohexylphenylketone, 2-methyl-2-morpholino-1-(4-methylthiophenyl)propan-1-one, 2-benzyl-2-dimethylamino-1-(4-morpholinophenyl)butan-1-one, and 2-hydroxy2-methyl-1-[4-(1-methylvinyl)phenyl]propan-1-one.

The benzoin-based compounds may include benzoin, benzoin methyl ether, benzoin ethyl ether, benzoin isopropyl ether, and benzoin isobutyl ether.

The benzophenone-based compounds may include benzophenone, methyl o-benzoyl benzoate, 4-phenylbenzophenone, 4-benzoyl-4'-methyldiphenyl sulfide, 3,3',4,4'-tetra(t-butylperoxycarbonyl)benzophenone, and 2,4,6-trimethylbenzophenone.

The thioxanthone-based compounds may include 2-isopropylthioxanthone, 4-isopropylthioxanthone, 2,4-diethylthioxanthone, 2,4-dichlorothioxanthone, and 1-chloro-4-propoxythioxanthone.

The triazine-based compounds may include 2,4-bis(trichloromethyl)-6-(4-methoxyphenyl)-1,3,5-triazine, 2,4-bis(trichloromethyl)-6-(4-methoxynaphthyl)-1,3,5-triazine, 2,4-bis(trichloromethyl)-6-piperonyl-1,3,5-triazine, 2,4-bis(trichloromethyl)-6-(4-methoxystyryl)-1,3,5-triazine, 2,4-bis(trichloromethyl)-6-[2-(5-methylfuran-2-yl)ethenyl]-1,3,5-triazine, 2,4-bis(trichloromethyl)-6-[2-(furan-2-yl)ethenyl]-1,3,5-triazine, 2,4-bis(trichloromethyl)-6-[2-(4-diethylamino-2-methylphenyl)ethenyl]-1,3,5-triazine, and 2,4-bis(trichloromethyl)-6-[2-(3,4-dimethoxyphenyl)ethenyl]-1,3,5-triazine.

The content of the photopolymerization initiators is not particularly limited and may be contained, for example, in an amount of 0.1 to 10 parts by weight based on 100 parts by weight of the photopolymerizable compounds. When the content is within the range, curing may be performed to an appropriate level to form a coating layer exhibiting the elastic modulus within the elastic modulus range.

In yet another or more embodiments, the coating layers may have a thickness in a range of 3 to 10 µm, more preferably 3 to 7 µm. When the coating layers have a thickness of less than 3 µm, the cohesion and elastic modulus are lowered, or it is difficult to develop adhesion. In particular, the adhesion between the polarizers and the coating layers may decrease, and the function of protecting the polarizers may decrease. In addition, when the coating layers have a thickness of beyond 10 µm, phase difference occurs, making transmittance control difficult. In particular, the adhesion between the conductive layers and the coating layers decreases, making it difficult to form the conductive layers.

In yet another embodiment, the coating layers may further include nanoparticles to increase the hardness and adhesion of the coating layers.

In yet another embodiment, at least one of the first polarizer 110-1 and the second polarizer 110-2 may have a thickness in a range of 30 to 200 µm, preferably 30 to 170 µm, and more preferably 50 to 150 µm. In this case, it is possible to manufacture a thin optical laminate while maintaining the optical properties of the at least one of the first polarizer 110-1 and the second polarizer 110-2.

The at least one of the first polarizer 110-1 and the second polarizer 110-2 may have a curved shape to manufacture an optical laminate with a curved surface. For example, among the two different polarizers 110-1 and 110-2 laminated in opposite directions in contact with both sides of the liquid crystal layer 130, the at least one of the first polarizer 110-1 and the second polarizer 110-2 may be curved toward one of the polarizers.

### Near-ultraviolet ray protection layer 113

The near-ultraviolet ray protective layer 113 of the present disclosure is formed on one surface of the polarizer 112 included in the first polarization plate 110-1, so the near-ultraviolet ray protective layer 113 serves to protect the polarizer. The near-ultraviolet protective layer may preferably be situated on the inner side of the polarizer, not directly facing the light source A. In this arrangement, both bleed-out prevention and liquid crystal layer protection are achieved. The near-ultraviolet ray protective layer 113 may include near-ultraviolet ray absorbers having a maximum absorption wavelength in a range of 390 to 430 nm or ultraviolet ray photosensitizers and may be formed, for example, by applying the near-ultraviolet ray absorbers in the form of a composition on the polarizer and curing the absorbers through ultraviolet ray irradiation. Specifically, the near-ultraviolet ray protective layer may transmit ultraviolet rays and selectively absorb near-ultraviolet rays by including at least one selected from the group consisting of near-ultraviolet ray absorbers and ultraviolet ray photosensitizers. The near-ultraviolet protective layer may further include a composition for forming a hard coating layer, the composition being commonly used in the technical field to which the present disclosure pertains, such as photocurable resins, initiators, and solvent leveling agents. In addition, the content of the near-ultraviolet ray protective layer may be adjusted in various ways within a range that does not deteriorate the physical properties of the variable-transmittance optical laminate according to the present disclosure and is not particularly limited.

The near-ultraviolet ray absorbers transmit ultraviolet rays and selectively absorb near-ultraviolet rays. The near-ultraviolet absorbers according to one embodiment of the present disclosure may have a maximum absorption wavelength in a range of 390 to 430 nm, preferably 395 to 425 nm, and more preferably 400 to 420 nm. The near-ultraviolet ray absorbers may include at least one type selected from the group consisting of cyanine, benzophenone compounds, benzotriazole, and triazine-based compounds. Cyanine-based derivatives are most appropriate in effectively absorbing near-ultraviolet rays at a wavelength in the 390nm to 430nm range. In the case of a typical display, 380 nm is set as the upper wavelength limit for ultraviolet ray blocking to transmit light in the short wavelength region (blue) of visible light. However, the present disclosure relates to a smart window laminate, and blocking or transmitting external light (sunlight) is the main function of the laminate. Thus, the smart window laminate is relatively less sensitive to color changes caused by partial blocking of the visible light region. That is possible since light blocking is performed at a wider wavelength by expanding the blocking region of light, and the light once could not be shielded due to the inevitable challenge of expressing natural colors in displays. Accordingly, the deterioration of high molecules and/or low molecules in a liquid crystal layer may be effectively prevented.

The near-ultraviolet ray absorbers may be contained in an amount of 0.01 to 5 parts by weight, preferably 0.1 to 1 part by weight, and more preferably 0.3 to 0.7 parts by weight, based on the total weight of the near-ultraviolet protective layer composition.

The ultraviolet ray photosensitizers shield ultraviolet rays through the absorption of the rays. At the same time, the ultraviolet ray photosensitizers promote the curing of a hard coating layer by transmitting (absorbing and then re-emitting) energy in a photochemical reaction to initiators described later and included in the hard coating composition. The ultraviolet ray photosensitizers absorb light in the ultraviolet ray range in a series of photochemical reactions to keep transmittance low while simultaneously inducing the initiation reaction of the initiators, which are the cause behind the crosslinking reaction of ultraviolet ray curable materials. In another embodiment of the present disclosure, when the laminated film includes the ultraviolet photosensitizers, the film's adhesion to the substrate may be improved. In yet another embodiment of the present disclosure, the ultraviolet ray photosensitizers may have a maximum absorption wavelength in a range of 350 to 400 nm, preferably 355 to 395 nm, and more preferably 360 to 390 nm.

The ultraviolet ray photosensitizers described above may include at least one type selected from the group consisting of oxazole, anthraquinone, naphthoquinone, quinone, thioxanthone, acridone, benzoyl diphenylphosphine oxide, 1, 2-diketone, phenothiazine, ketocoumarin, fluorene, naphthiazoline, biacetyl, benzyl and their derivatives, perylene, and substituted/unsubstituted anthracene. Oxazole-based compounds are appropriate to be used as the ultraviolet ray photosensitizers since the oxazole-based compounds may effectively absorb ultraviolet rays in the 350 to 400 nm range.

The ultraviolet ray photosensitizers may be contained in an amount of 0.01 to 5 parts by weight, preferably 0.1 to 2 parts by weight, and more preferably 0.5 to 1.5 parts by weight, based on the total weight of the near-ultraviolet protective layer composition.

### Second polarization plate 110-2

The description of the first polarization plate 110-1 is applicable to describe the second polarization plate 110-2 except that the second polarization plate includes or does not include an ultraviolet ray protection substrate and a near-ultraviolet ray protection layer which are included in the first polarization 110-1. Thus, the description thereof will be omitted.

In one or more embodiments, at least one of the first polarization plate 110-1 and the second polarization plate 110-2 may further include at least one type selected from the group consisting of a functional coating layer, a protective layer, a phase control layer, and/or a refractive index control layer.

The functional coating layer is provided to improve the hardness of the polarization plate. There is no particular limitation in the type of the functional coating layer as long as the functional coating layer may increase the hardness of the polarization plate, and for example, may include a hard coating layer and/or a low refractive index layer.

The hard coating layer may be formed from a hard coating composition containing acrylate-based compounds or epoxy-based compounds, inorganic fine particles, and photoinitiators. The acrylate-based compounds may include monomers or oligomers containing a (metha)acrylate group. As used herein, the term "(metha)acryl-" is used to refer to "methacryl-", "acryl-", or both. Non-limiting examples of the acrylate-based compounds may be neopentylglycolacrylate, 1,6-hexanediol(metha)acrylate, propylene glycoldi(metha)acrylate,triethyleneglycoldi(metha)acrylate, dipropyleneglycoldi(metha)acrylate, polyethyleneglycoldi(metha)acrylate, polypropyleneglycoldi(metha)acrylate, trimethylolpropanetri(metha)acrylate, trimethylolethanetri(metha)acrylate, 1,2,4-cyclohexanetetra(metha)acrylate, pentaglyceroltri(metha)acrylate, pentaerythritoltetra(metha)acrylate, pentaerythritoltri(metha)acrylate, dipentaerythritoltri(metha)acrylate, dipentaerythritolpenta(metha)acrylate, dipentaerythritoltetra(metha)acrylate, dipentaerythritolhexa(metha)acrylate, tripentaerythritoltri(metha)acrylate, tripentaerythritolhexatri(metha)acrylate, bis(2-hydroxyethyl)isocyanuratedi(metha)acrylate, hydroxyethyl(metha)acrylate, hydroxypropyl(metha)acrylate, hydroxybutyl(metha)acrylate, isooctyl(metha)acrylate, iso-dexyl(metha)acrylate, stearyl(metha)acrylate, tetrahydrofurfuryl(metha)acrylate, phenoxyethyl(metha)acrylate, or isobomeol(metha)acrylate. These may be used alone or in combination of two or more types. The acrylate-based compounds may include epoxy(metha)acrylate compounds and/or urethane (metha)acrylate compounds. In addition, the epoxy-based compounds may include monomers or oligomers having at least one epoxy group in the molecule. The epoxy group may be an alicyclic epoxy group. The alicyclic ring included in the epoxy group may have a carbon number in a range of 3 to 7, and for example, the epoxy group may be an alicyclic epoxy group (cyclohexylepoxy) including a cyclohexane ring. The alicyclic ring may have a substituent. For example, the alicyclic ring may include an alkyl substituent having a carbon number in a range of 1 to 20. When the carbon number of the alkyl substituent is beyond 20, it may be disadvantageous in terms of curing speed. The alkyl substituent may be straight-chain or branched. When branched, the alkyl substituent may have a carbon number in a range of 3 or more. Meanwhile, in the hard coating layer manufacturing method of the present disclosure, in addition to the ingredients described above, additives commonly used in the technical field to which the present disclosure pertains may further include such as photoinitiators, surfactants, anti-yellowing agents, leveling agents, and/or antifouling agents. In addition, the content of the additives may be adjusted in various ways within a range that does not deteriorate the physical properties of the hard coating layer composition and is not particularly limited.

The low refractive index layer may be provided to also improve the hardness of the polarization plate within a range that does not impair the purpose of the present disclosure. The low refractive index layer may include, for example, at least one low refractive index agent selected from the group consisting of SiO₂, Al₂O₃, MgF₂, CaF, and cryolite. In some embodiments, the low refractive index layer may contain compounds used for the hard coating layer and other resins commonly used in the technical field to which the present disclosure pertains. The hard coating layer and the low refractive index layer may each be used alone, and in some embodiments, may be used in a multi-layer structure.

The functional coating layer may be formed in direct contact with one surface of the polarizer but is not limited thereto. For example, when the polarizer includes a phase control layer and/or a refractive index control layer, the functional coating layer is formed on one surface of the phase control layer and the refractive index control layer. Thus, the functional coating layer, phase control layer, refractive index control layer, and polarizer may be sequentially laminated.

The functional coating layer is preferably formed on the surface of the polarizer facing the liquid crystal layer, the surface being the inner surface of the polarizer but is not limited to this, and the functional coating layer is also formed on the outer side of the polarizer. Thus, the polarizer, the functional coating layer, and the protective layer may be sequentially laminated. In this case, the functional coating layer provides a hardness level suitable for forming a member on the polarizing plate, the member being a transparent conductive layer, so cracks and scratches generated during the manufacturing or processing process of the mechanical laminate may be minimized.

The functional coating layer not only has excellent wear resistance but also further improves the bending resistance and durability of the optical laminate. More specifically, the functional coating layer more effectively suppresses the occurrence of defects such as cracks in the conductive layer, which are caused by spacer-driven pressure application in the bonding process of the optical laminate or by chemical reaction of liquid crystal and alignment film.

In one or more embodiments, after drying, the functional coating layer may have a thickness in a range of 1 to 50 µm, more preferably 1 to 40 µm, but is not limited thereto.

The protective layer (not shown) is intended to preserve the polarization properties of the polarizer from post-processing and the external environment and may be made in the form of a protective film. The protective layer may be formed in direct contact with one surface or both surfaces of the polarizer but is not limited to the formation method. For example, the protective layer may be used to have a multi-layer structure in which one or more protective layers are continuously laminated. The protective layer may be formed in direct contact with another member such as a phase control layer. In one or more embodiments, the protective layer may include at least one type selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

Additionally, the protective layer may further include ultraviolet ray absorbers on the outermost surface to prevent the function deterioration of the optical laminate. The ultraviolet ray absorbers are not particularly limited as long as the ultraviolet ray absorbers are used to prevent deterioration of the optical laminate caused by ultraviolet rays. For example, the ultraviolet ray absorbers may include salicylic acid-based ultraviolet ray absorbers (for example, phenylsalicylate and p-tert-butyl salicylate), benzophenone-based ultraviolet ray absorbers (for example, 2,4-dihydroxybenzophenone and 2,2'-dihydroxy-4,4'-dimethoxybenzophenone), benzotriazole-based ultraviolet ray absorbers (for example, 2-(2'-hydroxy-5'-methylphenyl)benzotriazole, 2-(2'-hydroxy-3',5' -di-tert-butylphenyl)benzotriazole, 2-(2' -hydroxy-3' -tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched chain dodecyl)-4-methylphenol, octyl-3-[3-tert-butyl-4-hydroxy-5-(chloro-2H-benzotriazol-2-yl)phenyl]propionate, and 2-ethylhexyl-3-[3-tertbutyl- mixtures of 4-hydroxy-5-(5-chloro-2H-benzotriazol-2-yl)phenyl]propionate), cyanoacrylate-based ultraviolet ray absorber (for example, 2'-ethylhexyl-2-cyano-3,3-diphenylacrylat and ethyl-2-cyano-3-(3',4'-methylenedioxyphenyl)-acrylate), and triazine-based ultraviolet ray absorbers. The benzotriazole-based ultraviolet ray absorbers or triazine-based ultraviolet ray absorbers are preferred because they have high transparency and are excellent in preventing the deterioration of substrates such as polarization plates. The benzotriazole-based ultraviolet ray absorbers are particularly preferred due to their more appropriate light absorption spectra. The benzotriazole-based ultraviolet ray absorbers may be bis-based, for example may include 6,6'-methylenebis(2-(2H-benzo[d][1,2,3]triazol-2-yl)-4-(2,4,4-trimethylpentan-2-yl)phenol) and 6,6' -methylenebis(2-(2H-benzo[d][1,2,3]triazol-2-yl)-4-(2-hydroxyethyl)phenol).

The protective layer is intended to protect the polarization properties of the polarization plate from post-processing and the external environment and may be made in the form of a protective film. The protective layer may be used to have a multi-layer structure in which one or more protective layers are continuously laminated. The protective layer may be used in combination with other functional layers.

In one or more embodiments, the protective layer may include at least one type selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The phase control layer is intended to complement the optical properties of the optical laminate and may be made in the form of retardation films, and conventional or later-developed retardation films may be used. For example, a quarter wave plate (1/4 wave plate) or a half wave plate (1/2 wave plate) may be used to delay the phase of light, and these may be used alone or in combination.

The phase control layer may be formed in direct contact with one surface of the polarizer but is not limited to the formation method. For example, the phase control layer may be formed in direct contact with one surface of the protective layer or may be formed in direct contact with one surface of the refractive index control layer.

The phase control layer may be a stretched polymer film or a liquid crystal polymer film obtained by stretching a polymer film capable of imparting optical anisotropy through stretching appropriately.

In yet another embodiment, the stretched polymer film may use a polymer layer containing a polymer or a copolymer of two or more monomers out of the monomers forming the polymer. The polymer may include polyolefins (for example, polyethylene (PE) or polypropylene (PP)), cyclo olefin polymers (COPs) (for example, polynorbornene), polyvinyl chloride (PVC), polyacrylonitrile (PAN), polysulfone (PSU), acryl resin, polycarbonate (PC), polyester (for example, polyethylene terephthalate (PET)), cellulose ester-based polymers (for example, polyacrylate, polyvinyl alcohol (PVA), or triacetyl cellulose (TAC)).

The method of obtaining the stretched polymer film is not particularly limited, for example, the stretched polymer film may be obtained by molding the polymer material into a film and then stretching the film. The molding method into the film form is not particularly limited, and it is possible to mold the material into a film by known methods such as injection molding, sheet molding, blow molding, injection blow molding, inflation molding, extrusion molding, foam molding, and cast molding. Secondary processing molding methods such as molding and vacuum molding may also be used. Among the methods, extrusion molding and cast molding are preferably used. At this time, for example, the unstretched film may be extruded using an extruder equipped with a T die and a circular die. In the case of obtaining a molded product by extrusion molding materials previously melt-kneaded with various resin components and additives may be used. In this case, a product may be molded by melt-kneading during extrusion molding. Additionally, the unstretched film may be cast-molded by dissolving the various resin components using a solvent such as chloroform or methylene dichloride, which is common to the various resin components, and then casting and drying the mixture for solidification.

The stretched polymer film may be manufactured by being uniaxially stretched in the mechanical direction (MD, longitudinal or lengthwise direction) of the molded film or being uniaxially stretched in a transverse direction (TD, transverse or widthwise direction) at 90 degrees to the mechanical direction, or the stretched polymer film may be manufactured by a sequential biaxial stretching method of roll stretching and tenter stretching, a simultaneous biaxial stretching method of tenter stretching, and a biaxial stretching method of tubular stretching.

The liquid crystal polymer film may include a reactive liquid crystal compound in a polymerized state. The description regarding the reactive liquid crystal compound of the coated polarizer described above is consistently applicable to the reactive liquid crystal compound included in the reactive crystal polymer film.

In one or more embodiments, the phase control layer may have a thickness in a range of 10 to 100 µm in the case of a polymer stretched film to reduce the thickness of the optical laminate, and 0.1 to 5 µm in the case of a liquid crystal polymer film, but is not limited thereto.

The refractive index control layer is provided to compensate for the difference in the refractive index of the optical laminate caused by the transparent conductive layer, and the refractive index control layer may improve visibility properties by reducing the difference in refractive index. In addition, the refractive index control layer may be provided to correct the color. The color correction is needed due to the working of the transparent conductive layer. Meanwhile, when the transparent conductive layers 120-1 and 120-2 described later have a pattern, through the refractive index control layer, it is possible to compensate for the difference in transmittance between the patterned area where the pattern is formed and the non-patterned area where the pattern is not formed.

Specifically, the transparent conductive layer is laminated adjacent to another member having a different refractive index, and a difference in light transmittance may occur due to a difference in refractive index with other adjacent layers. In particular, when a pattern is formed on a transparent conductive layer, a problem of visibly distinguishing between pattern areas and non-pattern areas may occur. Therefore, it is needed to include the refractive index control layer to reduce the difference in the light transmittance of the optical laminate by compensating for the refractive index. In particular, when a pattern is formed on a transparent conductive layer, the pattern area and the non-pattern area are not required to be separately visible.

In yet another embodiment, the refractive index of the refractive index control layer may be appropriately selected depending on the material of other adj acent members, but the refractive index is preferably in a range of 1.4 to 2.6, and more preferably 1.4 to 2.4. In this case, light loss due to a big difference in refractive index between the other member and the transparent conductive layer may be prevented. The refractive index control layer is not particularly limited as long as the refractive index control layer may prevent a big difference in refractive index between other members and the transparent conductive layer. Compounds used in the formation of a conventional or later-developed refractive index control layer may be used. For example, the refractive index control layer may be formed from a refractive index control layer-forming composition containing polymerizable isocyanurate compounds.

The polarization plates 110-1 and 110-2 may further include other functional layers to complement or enhance the properties thereof in addition to the functional layers described above, for example, may further include an overcoat layer to further enhance mechanical durability.

In one embodiment, at least one of the first polarization plate 110-1 and the second polarization plate 110-2 may have a thickness in a range of 30 to 200 µm, preferably 30 to 170 µm, and more preferably 50 to 150 µm. In this case, the polarization plates 110-1 and 110-2 may produce a thin optical laminate while maintaining optical properties.

### Transparent conductive layers 120-1 and 120-2

The transparent conductive layers 120-1 and 120-2 are provided to drive a liquid crystal layer 130 described later and may be formed in direct contact with the polarization plates. For example, as shown in FIG. 2, the first transparent conductive layer 120-1 and the second transparent conductive layer 120-2 may be formed in direct contact with the first polarization plate 110-1 and the second polarization plate 110-2, respectively.

Conventionally, optical laminates used in the manufacturing of smart windows were manufactured by forming a conductive layer for driving a liquid crystal on one side of a substrate and bonding the other side of the substrate with a polarization plate. However, the variable-transmittance optical laminate according to the present disclosure does not include a separate substrate for forming a conductive layer, and the optical laminate forms a conductive layer directly on one side of the polarization plate, thereby reducing the thickness of the laminate while addressing a transmittance issue and bending properties in light transmission mode.

In one embodiment of the present disclosure, the first transparent conductive layer 120-1 and the second transparent conductive layer 120-2 may be formed by directly depositing on one surface of the polarization plates 110-1 and 110-2, respectively. At this time, to increase the adhesion of the transparent conductive layers with the polarization plates 110-1 and 110-2, pre-treatment such as corona treatment or plasma treatment is performed on one side of the polarization plates, and then the conductive layers may be formed in direct contact with the pretreated surface of the polarization plates. The pre-treatment is not limited to corona treatment or plasma treatment and may use a conventional or later-developed pre-treatment process within the range that does not impair the purpose of the present disclosure.

In another embodiment, to increase the adhesion of the transparent conductive layers with the polarization plates, the transparent conductive layers 120-1 and 120-2 may be formed in direct contact with the polarization plates, respectively, Herein, an adhesion-aiding layer (not shown) is interposed therebetween, being situated on one surface of the polarization plates. The adhesion-aiding layer for use may include the adhesive and/or pressure sensitive adhesive material described in the description of a pressure sensitive adhesive/adhesive layer but is not limited thereto, the pressure sensitive adhesive/adhesive layer being among other members to be described later.

The transparent conductive layers 120-1 and 120-2 preferably have a transmittance of 50% or more to visible light, for example, may include at least one type selected from the group consisting of transparent conductive oxides, metals, carbon-based materials, conductive polymers, conductive inks, and nanowires but are not limited thereto. Conventional or later-developed transparent conductive layer materials may be used for the transparent conductive layers.

In one or more embodiments, the transparent conductive oxides may include at least one type selected from the group consisting of indium tin oxides (ITOs), indium zinc oxides (IZOs), indium zinc tin oxides (IZTOs), aluminum zinc oxides (AZOs), gallium zinc oxides (GZOs), fluorine tin oxides (FTOs), and zinc oxides (ZnOs). In addition, the metals may include at least one type selected from the group consisting of gold (Au), silver (Ag), copper (Cu), aluminum (Al), platinum (Pt), palladium (Pd), chromium (Cr), titanium (Ti), tungsten (W), niobium (Nb), Tantalum (Ta), vanadium (V), iron (Fe), manganese (Mn), cobalt (Co), nickel (Ni), and zinc (Zn), and alloys containing at least one of these metals. For example, the metals may include silver-palladium-copper (APC) alloy or copper-calcium (CuCa) alloy. The carbon-based materials may include at least one type selected from the group consisting of carbon nanotubes (CNTs) and graphene. The conductive polymers may include at least one type selected from the group consisting of polypyrrole, polythiophene, polyacetylene, poly(3,4-ethylenedioxythiophene) (PEDOT), and polyaniline. The conductive inks may include a mixture of metal powder and a curable polymer binder, and the nanowires may include, for example, silver nanowires (AgNW).

Additionally, the transparent conductive layers 110-2 and 120-2 may be formed into a two-layer or more structure by combining the materials. For example, the transparent conductive layers may be formed as a two-layer structure including a metal layer and a transparent conductive oxide layer to lower the reflectance rate of incident light and increase the transmittance.

The transparent conductive layers 110-2 and 120-2 may be formed by methods commonly used in the field, for example, may be formed by selecting an appropriate process among the methods such as coating processes (for example, a spin coat method, roller coat method, bar coat method, dip coat method, gravure coat method, curtain coat method, die coat method, spray coat method, doctor coat method, and kneader coat method); printing processes (for example, a screen printing method, spray printing method, inkjet printing method, iron plate printing method, intaglio printing method, and flat printing method); and deposition processes (for example, a chemical vapor deposition (CVD), physical vapor deposition (PVD), and plasma enhanced chemical vapor deposition (PECVD)).

### Liquid crystal layer 130

The liquid crystal layer 130 may change the driving mode of the optical laminate by adjusting the transmittance of incident light from one or more directions depending on an electric field.

The liquid crystal layer 130 may include liquid crystal compounds, for example, and the liquid crystal layer may be located in the space provided by a (not shown) and a spacer (not shown), the sealant layer and spacer being placed between the first polarization plate 110-1 and the second polarization plate 110-2 in a light control area.

The liquid crystal layer 130 is driven depending on the electric field. The liquid crystal layer 130 may be interposed between the first polarization plate 110-1 and the second polarization plate 110-2 located in the light control area of the optical laminate 100. In yet another embodiment, the liquid crystal layer 130 may be located in the space provided by a sealant layer (not shown) and a spacer (not shown), the sealant layer and spacer being placed between the first polarization plate 110-1 and the second polarization plate 110-2 in the light control area. In addition, the liquid crystal layer 130 may adjust the transmittance of incident light from an external light source depending on the electric field. The electric field is formed between the liquid crystal layer and the first transparent conductive layer 120-1 or between the liquid crystal layer and the second transparent conductive layer 120-2.

The liquid crystal layer 130 may be driven by a conventional or later-developed liquid crystal flow method. For example, a twisted nematic (TN) mode and a super twisted nematic (STN) mode may be used.

In yet another embodiment, the liquid crystal layer may include at least one type selected from the group consisting of ball spacers and column spacers. In particular, the ball spacers are preferable. The ball spacers may be one or more and preferably have a diameter in a range of 1 to 10 µm. In addition, as viewed in a plan direction, the ball spacers within the liquid crystal layer 110 (for example, light control area) preferably occupy 0.01% to 10% of the area of the liquid crystal layer 130 in terms of improving user visibility and transmittance in light transmission mode, but the occupation range is not limited.

### Others

In one embodiment, the liquid crystal layer 130 may further include other members within a range that does not impair the purpose of the present disclosure, for example, may further include sealants, alignment films, pressure sensitive adhesive/adhesive layers, and/or ultraviolet ray light absorbing layers, and may be formed on both sides of the liquid crystal layer 130 containing a liquid crystal compound.

The sealants may include a curable resin as a base resin. As the base resin, ultraviolet ray curable resins or thermosetting resins known in the art to be used for sealants may be used. The ultraviolet ray curable resins may be a polymer of ultraviolet ray curable monomers. The thermosetting resins may be a polymer of thermosetting monomers.

The base resin of the sealants may include, for example, acrylate resins, epoxy resins, urethane resins, phenol resins, or a mixture of these resins. In another embodiment, the base resin may include acrylate-based resins, and the acrylate-based resins may be a polymer of acrylic monomers. The acrylic monomers may include, for example, multifunctional acrylates. In yet another embodiment, the sealants may further include monomer components in the base resin. The monomer components may include, for example, monofunctional acrylates. In this specification, monofunctional acrylates may refer to a compound having one acrylic group, and multifunctional acrylate may refer to a compound having two or more acrylic groups. The curable resins may be cured by irradiation of ultraviolet rays and/or heating. The ultraviolet ray irradiation conditions or heating conditions may be appropriately selected within a range that does not impair the purpose of the present disclosure. If necessary, the sealants may further include initiators, for example, photoinitiators or thermal initiators.

The sealants may be formed by a method commonly used in the field, for example, by drawing the sealants to the outside of the liquid crystal layer (for example, inactive area) using a dispenser equipped with a nozzle.

The alignment films are not particularly limited as long as the alignment films are used for adding alignment to the liquid crystal compound. For example, the alignment films may be manufactured by applying and curing an alignment film coating composition containing alignment polymers, photopolymerization initiators, and solvents. The alignment polymers are not particularly limited, but polyacrylate-based resins, polyamic acid resins, polyimide-based resins, and polymers containing a cinnamate group may be used, and conventional or later-developed polymers capable of exhibiting alignment may be used.

The pressure sensitive adhesive/adhesive layer may be formed by using adhesive materials or pressure sensitive adhesive materials. To prevent peeling and bubbles from occurring when handling the optical laminate, the pressure sensitive adhesive/adhesive layer preferably has appropriate adhesive strength as well as transparency and thermal stability.

The adhesive materials may include conventional or later-developed adhesive materials, for example, photocurable adhesive materials may be used. The photocurable adhesive materials are crosslinked and cured by receiving active energy rays such as ultraviolet rays (UV rays) and electron beams (EBs) to exhibit strong adhesive strength and may be made from reactive oligomers, reactive monomers, and photopolymerization initiators.

The reactive oligomers are an important component since the reactive oligomers determine the properties of the adhesive materials and induce the formation of a polymer bond through a photopolymerization reaction to form a cured film. Usable reactive oligomers may include polyester-based resins, polyether-based resins, polyurethane-based resins, epoxy-based resins, polyacrylic-based resins, and silicone-based resins.

The reactive monomers act as a crosslinker and diluent for the reactive oligomers and affect the adhesive properties. Usable reactive monomers may include monofunctional monomers, multifunctional monomers, epoxy-based monomers, vinyl ethers, and cyclic ethers.

The photopolymerization initiators initiate photopolymerization by absorbing light energy and generating radicals or cations. Appropriate photopolymerization initiators may be selected and used depending on the photopolymerization resins.

The pressure sensitive adhesive materials may include conventional or later-developed adhesive materials. In one or more embodiments, acrylic-based adhesive materials, rubber-based adhesive materials, silicone-based adhesive materials, urethane-based adhesive materials, polyvinyl alcohol-based adhesive materials, polyvinylpyrrolidone-based adhesive materials, polyacrylamide-based adhesive materials, cellulose-based adhesive materials, and vinyl alkyl ether-based adhesive materials may be used. The pressure sensitive adhesive materials are not particularly limited as long as the pressure sensitive adhesive materials have pressure sensitive adhesive strength and viscoelasticity. In terms of ease of availability, the pressure sensitive adhesive materials may preferably include acrylic-based adhesive materials and may include, for example, (metha)acrylate copolymers, crosslinkers, and solvents.

The crosslinkers may include conventional or later-developed crosslinkers. For example, the crosslinkers may include polyisocyanate compounds, epoxy resins, melamine resins, urea resins, dialdehydes, and methylol polymers, and preferably may include polyisocyanate compounds.

The solvents may include common solvents used in the field of resin compositions. For example, alcohol-based compounds (for example, methanol, ethanol, isopropanol, butanol, and propylene glycol methoxy alcohol); ketone-based compounds (for example, methyl ethyl ketone, methyl butyl ketone, methyl isobutyl ketone, diethyl ketone, and dipropyl ketone); acetate-based compounds (for example, methyl acetate, ethyl acetate, butyl acetate, and propylene glycol methoxy acetate); cellosolve-based compounds (for example, methyl cellosolve, ethyl cellosolve, and propyl cellosolve); and hydrocarbon-based compounds (for example, hexane, heptane, benzene, toluene, and xylene). These may be used alone or in combination of two or more types.

The thickness of the pressure sensitive adhesive/adhesive layer may be appropriately determined depending on the type of resins serving as the pressure sensitive adhesive materials, the pressure sensitive adhesive strength, and the environment in which the pressure sensitive adhesive materials are used. In one embodiment, the pressure sensitive adhesive/adhesive layer may have a thickness in a range of 0.01 to 50 µm, preferably 0.05 to 20 µm, and more preferably 0.1 to 10 µm, to secure sufficient pressure sensitive adhesive strength and minimize the thickness of the optical laminate, but the thickness is not limited thereto.

The ultraviolet ray light absorbing layer is not particularly limited as long as the ultraviolet ray light absorbing layer is used to further prevent deterioration of the optical laminate caused by ultraviolet rays. For example, the ultraviolet ray light absorbing layer may include salicylic acid-based ultraviolet ray absorbers (for example, phenyl salicylate and p-tert-butyl salicylate), benzophenone-based ultraviolet ray absorbers (for example, 2,4-dihydroxybenzophenone and 2,2'-dihydroxy-4,4'-dimethoxybenzophenone), benzotriazole-based ultraviolet absorbers (for example, 2-(2' -hydroxy-5' -methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2' -hydroxy-3' -tert-butyl-5' -methylphenyl)-5-chlorobenzotriazole, 2-(2'-Hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched chain dodecyl)-4-methylphenol, and a mixture of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate), cyanoacrylate-based ultraviolet ray absorbers (2'-ethylhexyl-2-cyano-3,3-diphenylacrylate and ethyl-2-cyano-3-(3',4'-methylenedioxyphenyl)-acrylates), and triazine-based ultraviolet ray absorbers. The benzotriazole-based ultraviolet ray absorbers or triazine-based ultraviolet ray absorbers are preferable, the two absorbers having high transparency and being excellent in preventing deterioration of the polarization plates or layers with a variable transmittance. The benzotriazole-based ultraviolet ray absorbers with a more appropriate spectral absorption spectrum are especially preferable. The benzotriazole-based ultraviolet ray absorbers may be bis-based, for example may include 6,6'-methylenebis(2-(2H-benzo[d][1,2,3]triazol-2-yl)-4-(2,4,4-trimethylpentan-2-yl)phenol) and 6,6'-methylenebis(2-(2H-benzo[d][1,2,3]triazol-2-yl)-4-(2-hydroxyethyl)phenol).

### <Manufacturing method of optical laminate with variable transmittance>

The present disclosure includes a method of manufacturing a variable-transmittance optical laminate described above. The method is not particularly limited, and the optical laminate may be manufactured using any bonding technique or the photolithography technique described above.

For example, the conductive layers in contact with the polarization plates may be manufactured by applying a composition for forming a functional conductive layer onto a triacetyl cellulose film or cycloolefin polymer (COP) for coating and then bonding the coated product with a polyvinylalcohol-based polarizer. In addition, the conductive layers may also be manufactured in the following. Adhesive materials are applied to both sides of a polyvinyl alcohol-based polarizer (23 µm, KURARAY) to bond a triacetyl cellulose film or a triacetyl cellulose film and a cycloolefin film and then to manufacture polarization plates. Afterward, the plates' triacetyl cellulose film or cycloolefin film is coated with a composition for forming a functional conductive layer to form a conductive layer.

### <Smart windows>

In addition to the optical laminate, the present disclosure includes a smart window including the same. The present disclosure also includes vehicles including the same smart window applied to at least one of the front window, rear window, side window, sunroof window, and interior partition of the vehicles, and windows for buildings including the same smart window.

In vehicles including the smart window of the present disclosure, by using adhesive materials, vehicle glass may be bonded to both sides of an optical laminate including a liquid crystal layer and an optical functional layer. For example, the smart window may be manufactured by placing an adhesive film and vehicle glass on both sides of the optical laminate and then heating the product for 10 to 20 minutes at a temperature of 90°C and a vacuum of about 1 bar using a press machine. The smart windows may also be manufactured by coating resins on one side of the vehicle glass, vacuum bonding the vehicle glass to both sides of the optical laminate, and then ultraviolet ray curing the bonded optical laminate. The adhesive film may include an ethylenevinylacetate (EVA) film and a polyvinylbutyral (PVB) film. The resins may include OCR resins having a storage modulus (G') in a range of 103 to 105 Pa.

In addition, windows for buildings (glass for windows) may be bonded on one or both sides of the optical laminate. Smart window products may be manufactured by laminating glass for windows on one side of the optical laminate. Smart window products may be manufactured by applying ultraviolet ray adhesive materials on both sides of the optical laminate, bonding the optical laminate to window glass, and then ultraviolet ray curing the bonded product.

Hereinafter, experimental examples including specific embodiments and comparative examples are presented to aid understanding of the present disclosure, but these examples are only illustrative and do not limit the scope of the appended patent claims. It is obvious to those skilled in the art that various changes and modifications to the embodiments are possible within the scope and spirit of the present disclosure, and, naturally, such changes and modifications fall within the scope of the appended patent claims.

### Preparation Example 1: Preparation of near-ultraviolet ray protective layer composition

50.8 parts by weight of hexafunctional urethane acrylate (Kyoeisha Chemical Co., UA-3061), 44.6 parts by weight of butyl acetate, 3.3 parts by weight of 1-hydroxycyclohexylphenylketone, 0.3 parts by weight of silicone-based leveling agent (BYK, BYK-UV3530), 0.5 parts by weight of near-ultraviolet ray absorber (FDB-009 (λmax = 402 nm), Yamada), 0.5 parts by weight of ultraviolet ray photosensitizer (NF-NA-01 (Xmax = 379 nm), Nippon Chemical Works) were mixed by using a stirrer and filtered by using a PP filter, and then a near-ultraviolet ray protective layer composition was prepared.

### Preparation Example 2: Manufacturing of first polarization plate

The following processes of (1) to (7) were performed to manufacture a first polarization plate.

### (1) Swelling treatment process

As a fabric film, a polyvinylalcohol (PVA) film (Kurary poval film VF-PE # 6000, manufactured by Kabushiki Kaisha Kuraray, average degree of polymerization 2400, degree of saponification 99.9 mol%) with a thickness of 60 µm was conveyed while continuously unwinding the film from a fabric roll and was immersed in a swelling bath containing pure water at a temperature of 20°C for 30 seconds. Next, Roll-to-roll stretching (vertical uniaxial stretching) was performed with a difference in peripheral speed between nip rolls. The stretching ratio based on the fabric film was set to 2.5 times.

### (2) dyeing treatment process

The film that passed through the nip roll of (1) was immersed in a dyeing bath at a temperature of 30°C for 120 seconds with pure water:potassium iodide:iodine:boric acid at a mass ratio of 100:2:0.01:0.3. Next, roll-to-roll stretching (vertical uniaxial stretching) was performed with a difference in peripheral speed between nip rolls. The stretching ratio based on the film after the swelling treatment process was set to 1.1 times.

### (3) Cross-linking treatment process

The film that passed through the nip roll of (2) was immersed in a first cross-linking bath at a temperature of 56°C for 70 seconds with pure water:potassium iodide:boric acid at a mass ratio of 100:12:4. Roll-to-roll stretching (vertical uniaxial stretching) was performed with a difference in peripheral speed between a nip roll and another nip roll provided between the first cross-linking bath and a second cross-linking bath. The stretching ratio based on the film after the dyeing process was set to 1.9 times.

### (4) Complementary color processing process

The cross-linked film was immersed in a second cross-linking bath at a temperature of 40°C for 10 seconds with pure water:potassium iodide:boric acid at a mass ratio of 100:9:2.9.

### (5) Cleaning treatment process

After the second cross-linking treatment, the film was immersed in pure water at a temperature of 14°C in a washing bath for 5 seconds and washed at a shower volume of 5 m³/h and a shower temperature of 14°C.

### (6) Drying treatment process

To dry the cleaned film by heating, the film was passed through a drying furnace at a temperature of 80°C for 190 seconds. The moisture content after drying of the heat-dried polarizer film was 13.6%, and the thickness was about 21 µm.

### (7) Bonding treatment process

A water-based adhesive material containing 5 parts by mass of PVA based on 100 parts by mass of water was prepared. An ultraviolet ray blocking substrate (80 µm, TAC film, Hyosung) and a protective film (80 µm, ZRT film, Hyosung) were respectively laminated on both sides of the polarizer film obtained in (6) using the water-based adhesive material. The obtained laminate was exposed to ultraviolet ray light, the adhesive material was cured, and a first polarization plate was manufactured. The adhesive layer after ultraviolet ray exposure had a thickness of about 2 µm.

### Preparation Example 3: Formation of near-ultraviolet ray protective layer

The near-ultraviolet protective layer composition of Preparation Example 1 was applied on the polarization plate of Preparation Example 2 for coating to a thickness of 6 µm after curing, and then dried in solvent and irradiated with an accumulated ultraviolet ray light amount of 500 mJ/cm² under a nitrogen atmosphere to manufacture a near-ultraviolet protective layer.

### Preparation Example 4: Deposition of first transparent conductive layer - preparation of first laminate

The first polarization plate which was obtained in Preparation Example 3 and had a near-ultraviolet protection layer formed thereon was ready. 450 W DC power was applied to operate a sputter gun, and plasma was induced to an ITO (10 wt% Sn doped In₂O₃) target. A transparent conductive layer (ITO layer) with a thickness of 40 nm was formed on the near-ultraviolet protection layer. An ion gun was operated at 50 W DC power to ion-treat the transparent conductive layer, thereby manufacturing a first laminate including a first polarization plate and a first transparent conductive layer. Herein, the pressure at room temperature was maintained at 3 mTorr, and argon gas and oxygen gas were supplied at 30 sccm and 1 sccm, respectively.

### Preparation Example 5: Manufacturing of second polarization plate

A second laminate including a second polarization plate and a second transparent conductive layer was manufactured in the same manner as Preparation Examples 2 and 4, except that the second laminate did not include an ultraviolet ray protection substrate and a near-ultraviolet ray protection layer.

### Preparation Example 6: Formation of alignment film

An alignment solution (RN-4662, Nissan Chemical Industries) was applied on the first transparent conductive layer obtained in Preparation Example 4 and the second transparent conductive layer obtained in Preparation Example 5, and then dried at a temperature of 80°C for 2 minutes. Afterward, ultraviolet rays were irradiated on the dried alignment solution to form an alignment film.

### Preparation Example 7: Ball spacer distribution

First, a mixed solvent was prepared by mixing 0.03 g of ball spacer (SEKISUI SP series) with 100 ml of isopropyl alcohol (IPA). Next, the second laminate of Preparation Example 5 was placed in a spacer spreader (SDSS-KHU02, SHINDO ENG LAB), and the mixed solvent was spread at a temperature of 110°C and dried for 20 minutes to form a ball spacer on the alignment film.

### Preparation Example 8: Sealant, liquid crystal layer formation and bonding - manufacturing of optical laminate with variable transmittance

On the second transparent conductive layer of the second laminate having an alignment film formed thereon in Preparation Example 6, a sealant (Photolec S, SEKISUI) with a viscosity of 250,000 mPa·s was applied at a discharge pressure of 200 mPa using a sharp needle (PN-17G, MUSASHI company) and a sealant dispenser (SHOTmini 200Ωx, MUSASHI) to penetrate the depression. Liquid crystals were injected into the alignment layer of the second laminate using a drop method (One Drop Filling: ODF). Next, the polarization axes of the first polarization plate and the second polarization plate were arranged parallel to each other at 0° or 90°, the first laminate and the second laminate were bonded at a pressure of 3 Kg/cm², and then ultraviolet ray cured along the sealant line (500 mJ/cm²) to manufacture a variable-transmittance optical laminate.

### Example 1

The variable-transmittance optical laminate obtained in Preparation Example 8 was applied to Example 1.

### Example 2

A variable-transmittance optical laminate was manufactured in the same manner as in Example 1, except that a protective layer included in the first polarization plate was positioned on the opposite side of the liquid crystal layer, and a transparent conductive layer was formed on the ultraviolet ray protection substrate.

### Comparative Example 1

A variable-transmittance optical laminate was manufactured in the same manner as in Example 1, except that in the bonding process (7) of Preparation Example 2, a protective film (80 µm ZRT film (TAC film, not UV-TAC), Hyosung) was used instead of the ultraviolet ray protection substrate, and a near-ultraviolet ray protective layer was not separately included.

The structures of the variable-transmittance optical laminate of Examples 1, 2, and Comparative Example 1 are summarized in Table 1 below.

**[Table 1]**

| | | | Example 1 | Example 2 | Comparative Example 1 |
|---|---|---|---|---|---|
| Structure | First laminate | First polarization plate | Ultraviolet ray protection substrate | Near-ultraviolet ray protection layer | ZRT film |
| | | | polarizer | polarizer | polarizer |
| | | | Near-ultraviolet ray protection layer | Ultraviolet ray protection substrate | - |
| | | First transparent conductive layer | | | |
| | Liquid crystal layer | | | | |
| | Second laminate | Second transparent conductive layer | | | |
| | | Second polarization plate | | | |
| Lightfastness (Fade-meter) | | | ○ | Δ | x |

### Experimental Example

### (1) Lightfastness evaluation

A variable-transmittance optical laminate according to Examples and Comparative Examples was manufactured. On the condition that light source/2.0 T soda lime glass/variable-transmittance optical laminate were installed in the order, the ultraviolet ray protection substrate of the first polarization plate included in the optical laminate as shown in Example 1 faced outside, which meant facing an incident direction of a light source. Afterward, light was irradiated onto the optical laminate under the following conditions.
- Light source used: Carbon Arc Lamp-type
- Irradiance: 500 W/m² (Wavelength range: 300 nm to 700 nm)
- Test time: 1500 hours
- Temperature: 70°C

The opacity state (with voltage applied) of the optical laminate after the application of the lightfastness conditions was observed, and the lightfastness was evaluated according to the following criteria, which are shown in Table 1 above.

### <Evaluation criteria>

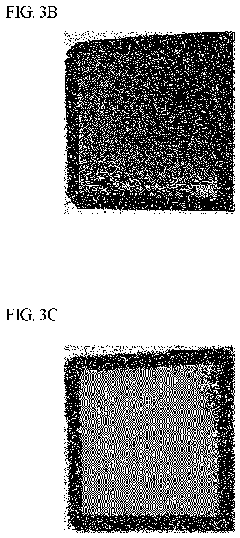

∘: maintenance of opacity state (FIG. 3A)
Δ: Confirmation of partial light leakage conditions (FIG. 3B)
X: Confirmation of whole light leakage conditions (FIG. 3C)

Referring to the experimental data in Table 1 above, as shown in examples of the variable-transmittance optical laminate according to the present disclosure, when an ultraviolet ray protection substrate and a near-ultraviolet ray protective layer were included in the first polarization plate of the first laminate, almost no light leakage phenomenon was observed during lightfastness evaluation, compared to comparative example in which light leakage was confirmed from the whole side since the optical laminate did not include a ultraviolet ray protection substrate or a near-ultraviolet ray protection layer (see FIG. 3C). In particular, compared to Example 2 in which the near-ultraviolet ray protection layer was located on the outer surface of the optical laminate facing the light source (see FIG. 3B), in Example 1, an ultraviolet ray protection substrate was located on the outer surface with the ultraviolet ray protection substrate, a polarizer, and a near-ultraviolet ray protection layer being sequentially laminated. Thus, in Example 1, even when voltage was applied, light leakage did not occur and the opacity state was maintained, showing better results in lightfastness evaluation (see FIG. 3A).

Therefore, the variable-transmittance optical laminate of the present disclosure prevents deterioration of the liquid crystal layer caused by ultraviolet rays and may help provide high-quality smart windows by including the optical laminate.

## Claims

1. A variable-transmittance optical laminate comprising:
a first polarization plate;
a first transparent conductive layer formed on one surface of the first polarization plate;
a second polarization plate positioned opposite to the first polarization plate;
a second transparent conductive layer formed on one surface of the second polarization plate and positioned opposite to the first transparent conductive layer; and
a liquid crystal layer interposed between the first transparent conductive layer and the second conductive layer,
wherein the first polarization plate comprises an ultraviolet ray protection substrate, a polarizer, and a near-ultraviolet ray protection layer.

2. The optical laminate of claim 1, wherein the first polarization plate is positioned on the outermost side of the variable-transmittance optical laminate to face a light source.

3. The optical laminate of claim 2, wherein an ultraviolet ray protection substrate, a polarizer, and a near-ultraviolet ray protection layer of the first polarization plate are sequentially laminated inward from outside facing the light source to inside.

4. The optical laminate of one of claims 1 to 3, wherein the ultraviolet ray protection substrate has a transmittance of 10% or less for a wavelength of 380 nm or less.

5. The optical laminate of one of claims 1 to 4, wherein the ultraviolet ray protection substrate contains an ultraviolet ray blocking additive.

6. The optical laminate of one of claims 1 to 5, wherein the ultraviolet ray protection substrate comprises at least one type selected from the group consisting of a polyester-based film, a cellulose-based film, a polyimide-based film, and a polycarbonate film.

7. The optical laminate of one of claims 1 to 6, wherein the near-ultraviolet ray protection layer comprises at least one type selected from the group consisting of a near-ultraviolet ray absorber and an ultraviolet ray photosensitizer.

8. The optical laminate of claim 7, wherein the near-ultraviolet ray absorber has a maximum absorption wavelength in a range of 390 to 430 nm.

9. The optical laminate of claim 8, wherein the near-ultraviolet ray absorber comprises a cyanine-based compound.

10. The optical laminate of claim 7 or 8, wherein the ultraviolet photosensitizer has a maximum absorption wavelength in a range of 350 to 400 nm.

11. The optical laminate of claim 10, wherein the ultraviolet ray photosensitizer comprises an oxazole-based compound.

12. The optical laminate of one of claims 1 to 11, wherein at least one of the first polarization plate and the second polarization plate comprises at least one type of functional layer selected from the group consisting of a functional coating layer, a protective layer, a phase control layer, and a refractive index control layer.

13. The optical laminate of one of claims 1 to 12, wherein at least one of the first and second polarization plates has a thickness in a range of 30 to 200 µm.

14. The optical laminate of one of claims 1 to 13, wherein at least one of the first and second transparent conductive layers has no separate substrate between the at least one of the first and second transparent conductive layers and either one of the first and second polarization plates, thereby being in direct contact with any one of the first and second polarization plates.

15. The optical laminate of one of claims 1 to 14, wherein at least one of the first and second transparent conductive layers further comprises an adhesion-aiding layer between the at least one of the first and second transparent conductive layers and either one of the first and second polarization plates and may be in direct contact with any one of the first and second polarization plates.
